# EUROPÄISCHE PATENTSCHRIFT

(11) **EP 2 339 710 B1**
(45) Veröffentlichungstag und Bekanntmachung des Hinweises auf die Patenterteilung: **05.06.2013**
(21) Anmeldenummer: 10177272.1
(22) Anmeldetag: 17.09.2010
(51) Int. Cl.: H02G 3/12, H02G 3/18

(54) **Elektrisches Installationsgerät**
Electric installation device
Appareil d'installation électrique

(30) Priorität: 24.12.2009 DE 102009060378
(43) Veröffentlichungstag der Anmeldung: 29.06.2011
(73) Patentinhaber: Albrecht Jung GmbH & Co. KG, 58579 Schalksmühle (DE)
(72) Erfinder: Soleinsky, Stefan, 58566, Kierspe (DE); Schäfer, Dirk, 58579, Schalksmühle (DE); Ehrental, Frank, 58256, Ennepetal (DE); Engel, Volker, 58507, Lüdenscheid (DE); Schmale, Wolfgang, 58553, Halver (DE); Schmidt-Sinderhauf, Heinz, 58540, Meinerzhagen (DE); Maslow, Stefan, 58339, Breckerfeld (DE); Koch, Eckhard, 58091, Hagen (DE)

(56) Entgegenhaltungen:
- DE-A1- 4 028 766
- DE-U1- 9 212 248

## Beschreibung

Die vorliegende Erfindung geht von einem gemäß Oberbegriff des Hauptanspruch konzipierten elektrischen Installationsgerät für die Gebäudesystemtechnik aus.

Derartige elektrische Installationsgeräte sind in der Regel dafür vorgesehen, in sogenannte Installationsdosen montiert zu werden. Damit auf einfache Art und Weise eine zuverlässige Befestigung der elektrischen Installationsgeräte gewährleistet ist, sind diese mit sogenannten Spreizkrallen ausgerüstet, welche über Spreizschrauben betrieben werden. Über die Spreizschrauben können die Spreizkrallen je nach Bedarf in eine zurückgezogene "Parkposition" und eine ausgefahrene "Festlegungsposition" verstellt werden.

Durch die DE 40 28 766 C2 ist ein dem Oberbegriff des Hauptanspruches entsprechendes elektrisches Installationsgerät bekannt geworden. Dieses elektrische Installationsgerät weist ein aus Kunststoff bestehendes, zur Aufnahme von Funktionselementen vorgesehenes Gehäuse bzw. Sockelteil auf, an welchem ein Träger und jeweils zwei Befestigungseinrichtungen festgelegt sind. Jede Befestigungseinrichtung weist eine im Wesentlichen L-förmig ausgebildete, aus einem Basisschenkel und einem Bedienschenkel bestehende Spreizkralle und eine Spreizschraube auf. Zur Lagerung der Spreizkralle dient dabei eine im Träger vorhandene schlitzartige Durchstecköffnung. Zur Lagesicherung der Spreizkralle sind im Bereich der Durchstecköffnung zwei elastisch auslenkbare Vorsprünge an den Träger angeformt. Durch eine solche Anordnung sind bereits einfache und kostengünstige Montagevoraussetzungen realisiert.

Außerdem ist durch die DE 196 39 254 A1 ein elektrisches Installationsgerät bekannt geworden, welches mit zwei Befestigungseinrichtungen ausgerüstet ist, die jeweils im Wesentlichen aus einer Spreizkralle und einer Spreizschraube bestehen. Ausgehend von derart ausgebildeten elektrischen Installationsgeräten liegt der vorliegenden Erfindung die Aufgabe zugrunde, ein elektrisches Installationsgerät zu schaffen, welches bei Realisierung einer besonders stabil ausgeführten Befestigungseinrichtung eine montagetechnisch weiter vereinfachte Lagerung und Montagesicherung für die Spreizkrallen aufweist.

Erfindungsgemäß wird diese Aufgabe durch die im Hauptanspruch angegebenen Merkmale gelöst.

Bei einer solchen Ausbildung ist besonders vorteilhaft, dass jede Spreizkralle bei Bedarf auf einfache Art und Weise wieder aus ihrer Montageposition entfernt werden kann.

Zudem ist besonders vorteilhaft, dass durch die Rasteinrichtung auf einfache Art und Weise auch eine exakte Führung des Bedienschenkels während der Verstellung gewährleistet ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein solches elektrisches Installationsgerät räumlich in Explosionsdarstellung;
- Fig.: 2: prinziphaft einen Zusammenbau eines solchen elektrischen Installationsgerätes in der Draufsicht;
- Fig. 3:: prinziphaft das Detail X gemäß Figur 2;
- Fig.: 4: prinziphaft einen Zusammenbau eines solchen elektrischen Installationsgerätes räumlich von schräg unten gesehen;
- Fig.: 5: prinziphaft einen Zusammenbau eines solchen elektrischen Installationsgerätes in der Untersicht.

Wie aus den Figuren hervorgeht, besteht ein solches elektrisches Installationsgerät im Wesentlichen aus einem aus Kunststoff bestehenden, zur Aufnahme von Funktionselementen vorgesehenen Gehäuse, mit einem Sockelteil 1 an welchem ein Träger 2 und zwei jeweils eine Spreizkralle 3 und eine Spreizschraube 4 aufweisende Befestigungseinrichtungen festgelegt sind. Jede Spreizkralle 3 ist etwa L-förmig ausgebildet und weist einen Basisschenkel 5 und einen Bedienschenkel 6 auf. Am Sockelteil 1 ist eine zum Gehäuse gehörige Funktionsplatte 7 festgelegt, welche an zwei sich gegenüberliegenden Seitenwänden jeweils eine Rasteinrichtungen 8 aufweist.

Wie des weiteren aus den Figuren hervorgeht, ist der Träger 2 als Tragring ausgeführt, an den wie üblich, zwei Befestigungsbeine 9 angeformt sind. Jedes der beiden Befestigungsbeine 9 ist mit zwei Befestigungsstegen 10, einer Durchstecköffnung 11 und zwei Haltelaschen 12 versehen. Zudem ist jedes Befestigungsbein 9 mit einer, mit einer Spreizschraube 4 zusammenwirkenden Gewindeausnehmung 13 versehen. Zwei Befestigungsstege 10 und eine Gewindeausnehmungen 13 sind jeweils an bzw. in einem vom Befestigungsbein 9 abgewinkelten Befestigungsfuß 14 vorhanden. An seinem freien Endbereich ist jeder Befestigungssteg 10 mit einem abgesetzten Verdrehstück 15 versehen. Im Sockelteil 1 ist für jeden der vier Befestigungsstege 10 eine Befestigungsdurchführung 16 vorhanden. Zur Befestigung des Trägers 2 am Sockelteil 1 werden zunächst die vier Befestigungsstege 10 durch ihre zugehörige Befestigungsdurchführung 16 gesteckt und anschließend werden die Verdrehstücke 15 verdreht, so dass diese mit ihrem Schulterbereich am Boden des Sockelteils 1 zur Anlage kommen und somit eine dauerhafte, sichere Befestigung des Trägers 2 am Sockelteil 1 geschaffen ist.

Wie des weiteren aus den Figuren hervorgeht, sind die beiden Rasteinrichtungen 8 einstückig an die Funktionsplatte 7 angeformt und jeweils U-förmig ausgeführt. Um eine zuverlässige Verrastung mit der jeweils zugeordneten Spreizkralle 3 herzustellen, sind an die Innenfläche einer jeden Rasteinrichtung 8 zwei Rastnasen 17 angeformt, die sich gegenüberliegend an den freien Enden der Rasteinrichtung 8 befinden. Durch die U-förmige Ausbildung der beiden Rasteinrichtungen 8 entsteht eine gute Federwirkung, so dass sowohl eine sichere Halterung der Spreizkrallen 3 in ihrer Montageposition gewährleistet ist und diese als auch bei Bedarf einfach wieder aus ihrer Montageposition herausgenommen werden können. Außerdem sind, um eine gut wirksame und sichere Rastverbindung zu gewährleisten an jedem Bedienschenkel 6 der beiden Spreizkrallen 3 zwei Rasthaken 18 angeformt, die sich jeweils am freien Endbereich der Bedienschenkel 6 befinden und in der gesicherten Montageposition mit den Rastnasen 17 der beiden Rasteinrichtungen 8 in Wirkverbindung kommen. Die Kontur der freien Endbereiche der Bedienschenkel 6 ist dabei derart an die Kontur der Innenfläche der zugeordneten Rasteinrichtung angepasst, so dass sich die Spreizkrallen 3 über ihre Bedienschenkel 6 zur Krafteinleitung an der Funktionsplatte 7 abstützen können. Um während der Verstellung eine gute Führung der Spreizkrallen 3 zu gewährleisten, umgeben die U-förmig ausgebildeten Rasteinrichtungen 8 den freien Endbereich des zugehörigen Bedienschenkels 6 der zugeordneten Spreizkralle 3. Zur Montage werden die Spreizkrallen 3 mit ihren Bedienschenkeln 6 durch die zugehörige Durchstecköffnung 11 des Trägers 2 gesteckt und kommen dann mit ihrem gabelartig ausgebildeten Bedienschenkel 6 zwischen dem Kopf und dem Absatz der zugehörigen Spreizschraube 4 zu liegen. Bei diesem Vorgang wird auch gleichzeitig die Rastsicherung mit der zugehörigen Rasteinrichtung 8 hergestellt. Somit ist nicht nur eine einfache und komfortable Montage der Spreizkrallen 3 möglich, sondern außerdem ist sichergestellt, dass die Spreizkrallen 3 einfach und komfortabel verstellt werden können.

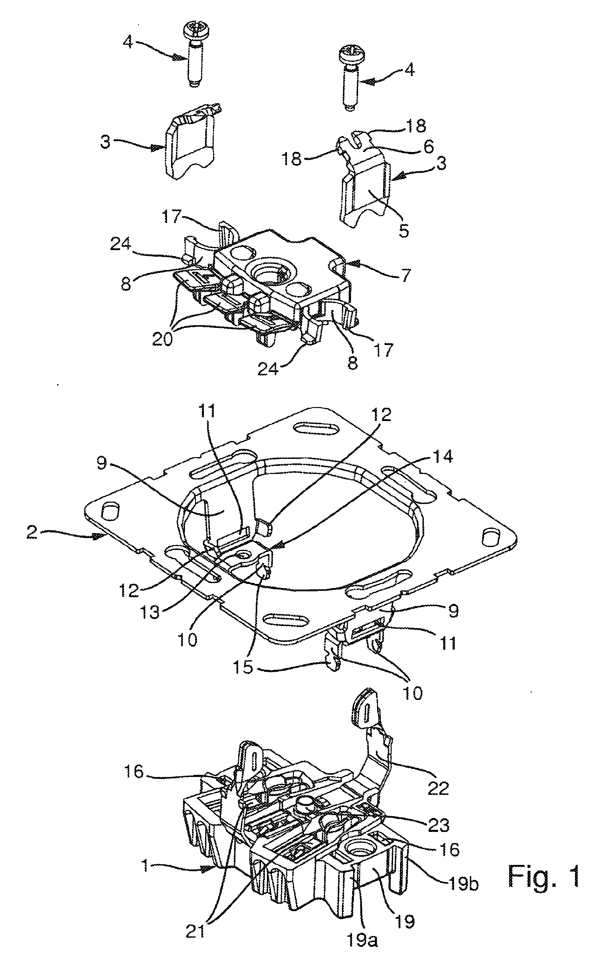

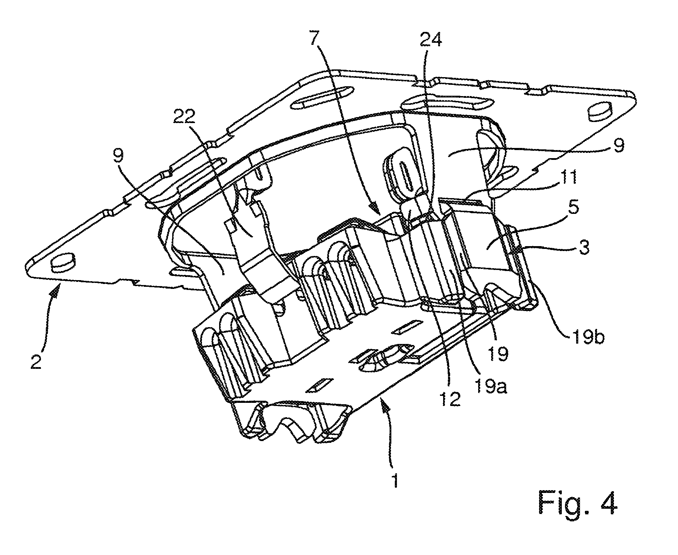

Wie insbesondere aus Figur 1 und Figur 4 hervorgeht, weist das Sockelteil 1 zwei Aufnahmetaschen 19 zur geschützten Aufnahme der beiden Spreizkrallen 3 auf. Jede Aufnahmetasche 19 wird im Wesentlichen durch zwei vorstehende einstückig an das Sockelteil 1 angeformte Längsstege 19a, 19b gebildet. In der sogenannten "Parkposition" befindet sich die Spreizkralle 3 maximal zurückgezogen in ihrer Aufnahmetasche 19, so dass nicht nur eine komfortable Handhabung durch den Installateur bzw. Benutzer gewährleistet ist, sondern auch die Gefahr während der Installationsarbeiten elektrische Leitungen zu verletzen minimiert ist. Aus ihrer "Parkposition" können die Spreizkrallen 3 auf einfache Art und Weise herausbewegt werden, indem die Spreizschrauben 4 entsprechend verdreht werden, bis z. B. die "Festlegeposition" erreicht ist. Auf gleiche Art und Weise bei umgekehrter Verdrehung der Spreizschrauben 4 können die Spreizkrallen 3 wieder in ihre "Parkposition" zurückgeführt werden. Um eine besonders stabile Ausführung der Spreizkrallen 3 zu erreichen, weisen deren Basisschenkel 5 als Versteifungen wirkende Einprägungen und Abwinklungen auf.

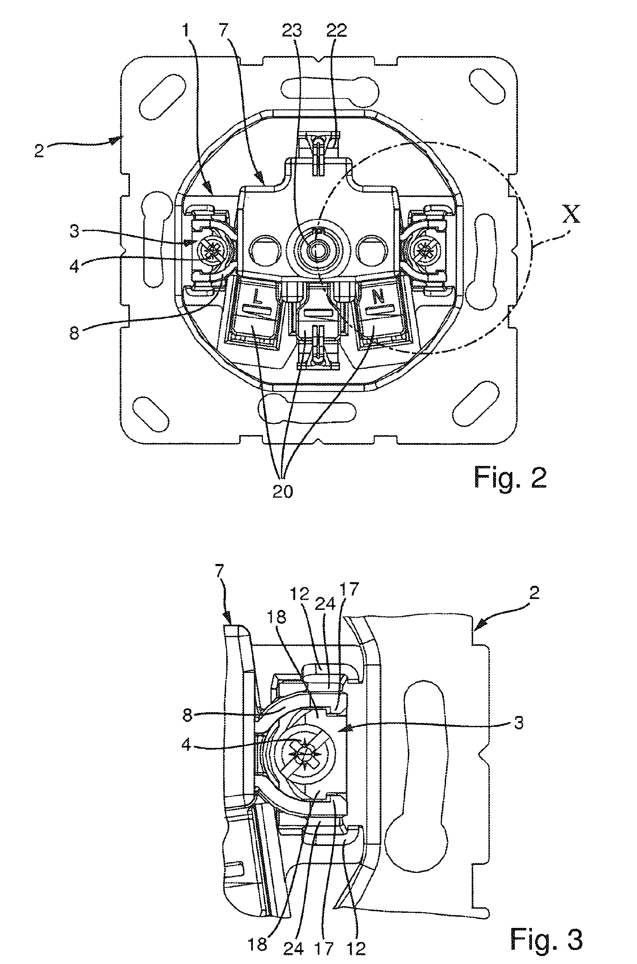

Wie insbesondere aus Figur 1, Figur 2 und Figur 3 hervorgeht, ist die Funktionsplatte 7 als sogenannte Lösehebelplatte ausgeführt. Zu diesem Zweck sind drei elastisch auslenkbare Lösehebel 20 einstückig an der Funktionsplatte 7 angeformt, welche mit ihrem Betätigungsnocken bei Betätigung jeweils auf das zugeordnete Federelement der drei im Sockelteil 1 befindlichen elektrischen Kontaktteile 21 einwirkt. Wie üblich, steht eines der elektrischen Kontaktteile 21 mit dem Erdungsbügel 22 in Verbindung und sind die beiden anderen Kontaktteile 21 zur Kontaktierung der beiden Steckerstifte eines einzuführenden Steckers vorgesehen. Wie des weiteren insbesondere aus Figur 1, Figur 2 und Figur 3 hervorgeht, ist die Funktionsplatte 7 zur Komplettierung des Gehäuses durch eine zentral angeordnete Bördelbuchse 23 dauerhaft am Sockelteil 1 festgelegt. Außerdem kommen die vier an den Träger 2 angeformten Haltelaschen 12 jeweils haltend an entsprechend an die Funktionsplatte 7 angeformte Haltebereiche 24 zur Anlage. Beim vorliegenden Ausführungsbeispiel sind die vier Haltebereiche 24 an die Außenwandungen der beiden Rasteinrichtungen 8 der Funktionsplatte 7 angeformt. Außerdem ist beim vorliegenden Ausführungsbeispiel die Funktionsplatte 7 als mit Seitenwandungen versehene Lösehebeleinrichtung ausgebildet, wobei diese zudem als Basis für eine sogenannte Kindersicherung (Berührungsschutzvorrichtung) dient. Eine solche Berührungsschutzvorrichtung ist dafür vorgesehen, die zur Einführung der beiden Steckerstifte vorgesehenen Steckeröffnungen automatisch zu sperren und nur dann freizugeben, wenn die beiden Steckerstifte des Steckers gleichzeitig in die Steckeröffnungen eingeführt werden. Zu diesem Zweck ist ein federbelastetes, der Einfachheit halber nicht näher dargestelltes, Sperrelement vorgesehen, welches mit seiner Oberseite gleitend an der den Kontaktteilen 21 zugewandten Innenfläche einer am Sockelteil 1 festlegbaren, als Lösehebeleinrichtung ausgeführten Funktionsplatte 7 zur Anlage kommt. Die zu diesem Zweck mit dem Sperrelement zusammenwirkenden Steuermittel sind einstückig an die Innenfläche der Funktionsplatte 7 angeformt. Als Federelement kann z. B. eine Schraubendruckfeder vorgesehen sein. Oftmals sind die mit dem Federelement zusammenwirkenden Sperrelemente als Schiebestück, Drehstück usw. ausgebildet.

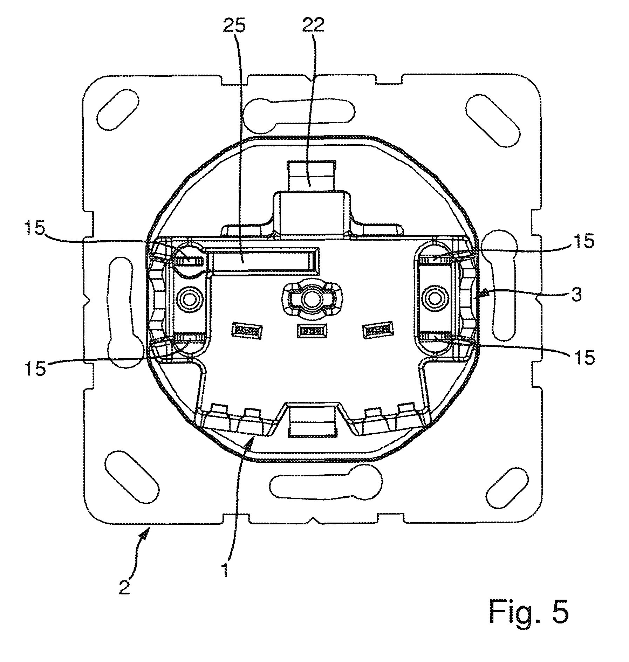

Wie insbesondere aus Figur 1 und Figur 5 hervorgeht, steht der Erdungsbügel 22 über eine Kontaktbrücke 25 elektrisch leitend mit dem Träger 2 in Verbindung. Die elektrisch leitende Verbindung wird einerseits dadurch hergestellt, weil die beiden Befestigungsbeine 9 des Trägers 2 mit ihren jeweils zwei Befestigungsstegen 10 durch die vier im Sockelteil 1 befindlichen Befestigungsdurchführungen 16 hindurchgesteckt sind und dann der freie Endbereich eines der Befestigungsstege 10 mit der Kontaktbrücke 25 kontaktgebend in Wirkverbindung kommt. Dies geschieht dauerhaft dadurch, weil die freien Endbereiche der Befestigungsstege 10 zur sicheren Festlegung des Trägers 2 am Sockelteil 1 jeweils mit einem Verdrehstück 15 versehen sind, welches nach dem Durchstecken durch die Befestigungsdurchführung 16 verdreht werden und dabei in drei Fällen sperrend am Boden des Sockelteils 1 und in einem Fall an der unteren Hauptfläche der Kontaktbrücke 25 innig zur Anlage kommen bzw. kommt. Andererseits wird eine elektrisch leitende Verbindung mit dem Erdungsbügel 22 dadurch hergestellt, weil der zugeordnete Endbereich der Kontaktbrücke 25 mit dem Erdungsbügel 22 stoffschlüssig und/oder kraftschlüssig in Verbindung kommt.

## Patentansprüche

1. Elektrisches Installationsgerät für die Gebäudesystemtechnik mit einem aus Kunststoff bestehenden, zur Aufnahme von Funktionselementen vorgesehenen Gehäuse, an dessen Sockelteil (1) ein Träger (2) festgelegt ist und welches zur Halterung in einer Installationsdose mit zumindest einer, eine Spreizkralle (3) und eine Spreizschraube (4) aufweisenden Befestigungseinrichtung ausgerüstet ist, wobei die Spreizkralle (3) einen Basisschenkel (5) und einen winklig davon abstehenden, gabelförmig ausgebildeten Bedienschenkel (6) aufweist, welcher durch eine Durchstecköffnung (11) des Trägers (2) hindurchgeführt ist und wobei die Spreizschraube (4) zur Wirkverbindung mit dem Bedienschenkel (6) unterhalb ihres Schraubenkopfes einen Absatz aufweist, wobei an den Bedienschenkel (6) der Spreizkralle (3) zumindest ein Rasthaken (18) angeformt ist, welcher mit einer Rasteinrichtung (8) zusammenwirkt, die an eine am Sockelteil (1) festlegbare Funktionsplatte (7) angeformt ist, **dadurch gekennzeichnet, dass** jede Spreizkralle (3) bei Bedarf auf einfache Art und Weise wieder aus ihrer Montageposition entfernt werden kann.

2. Elektrisches Installationsgerät nach Anspruch 1, **dadurch gekennzeichnet, dass** zumindest eine Rasteinrichtung (8) der Funktionsplatte (7) U-förmig ausgebildet ist und, dass an die Innenfläche jeder Rasteinrichtung (8) zumindest eine Rastnase (17) angeformt sind.

3. Elektrisches Installationsgerät nach einem der Ansprüche 1 oder 2, **dadurch gekennzeichnet, dass** der freie Endbereich des Bedienschenkels (6) zumindest einer Spreizkralle (3) von der Rasteinrichtung (8) der Funktionsplatte (7) U-förmig umfasst wird.

4. Elektrisches Installationsgerät nach einem der Ansprüche 1 bis 3, **dadurch gekennzeichnet, dass** an den Träger (2) zumindest eine Haltelasche (12) angeformt ist, die haltend an zumindest einen an die Funktionsplatte (7) angeformten Haltebereich (24) zur Anlage kommt.

5. Elektrisches Installationsgerät nach einem der Ansprüche 1 bis 4, **dadurch gekennzeichnet, dass** die Funktionsplatte (7) einstückig mit mehreren Lösehebeln (20) versehen ist.

6. Elektrisches Installationsgerät nach einem der Ansprüche 1 bis 5, **dadurch gekennzeichnet, dass** der Träger (2) als Tragring ausgeführt ist an den zwei Befestigungsbeine (9) angeformt sind.

7. Elektrisches Installationsgerät nach einem der Ansprüche 1 bis 6, **dadurch gekennzeichnet, dass** der Träger (2) durch angeformte Befestigungsstege (10), welche in Befestigungsdurchführungen (16) des Sockelteils (1) eingreifen am Sockelteil (1) des Gehäuses festgelegt ist.

8. Elektrisches Installationsgerät nach einem der Ansprüche 1 bis 7, **dadurch gekennzeichnet, dass** zumindest ein Befestigungssteg (10) der beiden an den Träger (2) angeformten Befestigungsbeine (9) mit einem Verdrehstück (15) versehen ist.

9. Elektrisches Installationsgerät nach einem der Ansprüche 1 bis 8, **dadurch gekennzeichnet, dass** zumindest ein am Träger (2) vorhandenes Befestigungsbein (9) eine zum Zusammenwirken mit einer Spreizschraube (4) vorgesehene Gewindeausnehmung (13) aufweist.

10. Elektrisches Installationsgerät nach Anspruch 9, **dadurch gekennzeichnet, dass** zumindest eine Gewindeausnehmung (13) in einem vom Befestigungsbein (9) abgewinkelten Befestigungsfuß (14) eingebracht ist.

11. Elektrisches Installationsgerät nach einem der Ansprüche 1 bis 10, **dadurch gekennzeichnet, dass** der Basisschenkel (5) der Spreizkralle (3) mit zumindest einer Versteifung versehen ist.

12. Elektrisches Installationsgerät nach einem der Ansprüche 1 bis 11, **dadurch gekennzeichnet, dass** die Funktionsplatte (7) mit ihrer sockelseitigen Hauptfläche als Basis für die Unterbringung einer Berührungsschutzeinrichtung vorgesehen ist.

## Claims

1. Electrical installation device for use in building system engineering, having a housing made of plastic which is provided for accommodating functional elements and on whose base constituent (1) a support (2) is located and which is equipped with at least one fastening facility comprising a claw (3) and an expanding screw (4) for mounting in an installation box, the claw (3) having a basic limb (5) as well as an operating limb (6) of a fork-shaped design which sticks out at an angle from the same and which is guided through a pass-through hole (11) in the support (2), and with the expanding screw (4) having a shoulder below its screw head for effecting an operative connection with the operating limb (6), whereby at least one snap-in hook (18) is moulded onto the operating limb (6) of the claw (3) and interacts with a snap-in facility (8) which is moulded onto the function panel (7) which is located on the base constituent (1), **characterised in that** each claw (3) can be removed from its mounted position by simple means, if necessary.

2. Electrical installation device according to Claim 1, **characterised in that** at least one snap-in facility (8) of the function panel (7) is of a U-shaped design and that at least one catch projection (17) is moulded onto the inner surface of each snap-in facility (8).

3. Electrical installation device according to Claim 1 or Claim 2, **characterised in that** the free end zone of the operating limb (6) of at least one claw (3) is encompassed in a U-shaped manner by the snap-in facility (8) of the function panel (7).

4. Electrical installation device according to any of Claims 1 to 3, **characterised in that** at least one holding lug (12) is moulded onto the support (2) and comes to rest in a retaining manner on at least one retaining zone (24) moulded onto the function panel (7).

5. Electrical installation device according to any of Claims 1 to 4, **characterised in that** the function panel (7) is integrally provided with a plurality of release levers (20).

6. Electrical installation device according to any of Claims 1 to 5, **characterised in that** the support (2) is designed as a carrier ring to which two fastening limbs (9) are moulded on.

7. Electrical installation device according to any of Claims 1 to 6, **characterised in that** the support (2) is fixed to the base constituent (1) of the housing by moulded-on fastening bars (10) which engage in fastening through-holes (16) in the base constituent (1).

8. Electrical installation device according to any of Claims 1 to 7, **characterised in that** at least one fastening bar (10) of the two fastening limbs (9) moulded onto the support (2) is provided with an anti-twist component (15).

9. Electrical installation device according to any of Claims 1 to 8, **characterised in that** at least one fastening limb (9) provided on the support (2) has a threaded recess (13) for interacting with an expanding screw (4).

10. Electrical installation device according to Claim 9, **characterised in that** at least one threaded recess (13) is set into a fastening foot (14) sticking out at an angle from the fastening limb (9).

11. Electrical installation device according to any of Claims 1 to 10, **characterised in that** the basic limb (5) of the claw (3) is provided with at least one brace.

12. Electrical installation device according to any of Claims 1 to 11, **characterised in that** the function panel (7) with its main surface on the base side is provided as the basis for accommodating a touch guard facility.

## Revendications

1. Dispositif d'installation électrique pour la domotique comprenant un carter constitué de matière synthétique pour la réception d'éléments fonctionnels sur le socle (1) duquel est localisé un support (2) et qui est équipé d'un dispositif de fixation présentant un crampon extensible (3) et une vis de réglage (4) en vue de la fixation dans un boîtier d'installation, le crampon extensible (3) présentant une branche de base (5) et une branche de commande (6) en saillant de manière angulaire et constituée en fourche et qui est passée à travers une ouverture traversante (11) du support (2) et la vis de réglage (4) présentant une épaule en-dessous de sa tête de vis en vue d'une connexion active avec la branche de commande (6), au moins un crochet d'arrêt (18) venant en une seule pièce sur la branche de commande (6) du crampon extensible (3) et coopérant avec un dispositif d'arrêt (18) venant en une seule pièce avec un panneau fonctionnel (7) pouvant être fixé sur le socle (1), **caractérisé en ce que** chacun des crampons extensibles (3) peut être retiré de manière simple de sa position de montage en cas de besoin.

2. Dispositif d'installation électrique selon la revendication 1, **caractérisé en ce qu'**au moins un dispositif d'arrêt (8) du panneau fonctionnel (7) est constitué en U et qu'au moins un ergot d'arrêt (17) vient en une seule pièce avec la face intérieure de chaque dispositif d'arrêt (8).

3. Dispositif d'installation électrique selon l'une quelconque des revendications 1 ou 2, **caractérisé en ce que** la zone d'extrémité libre de la branche de commande (6) d'au moins un crampon extensible (3) est enserré en U par le dispositif d'arrêt (8) du panneau fonctionnel (7).

4. Dispositif d'installation électrique selon l'une quelconque des revendications 1 à 3, **caractérisé en ce qu'**au moins un collier de maintien (12) qui est adjacente à une zone de support (24) venant en maintien en une seule pièce avec le panneau fonctionnel (7) vient en une seule pièce avec le support (2).

5. Dispositif d'installation électrique selon l'une quelconque des revendications 1 à 4, **caractérisé en ce que** le panneau fonctionnel (7) est muni en monobloc de plusieurs leviers de déblocage (20).

6. Dispositif d'installation électrique selon l'une quelconque des revendications 1 à 5, **caractérisé en ce que** le support (2) est exécuté en anneau support sur lequel viennent en une seule pièce deux jambes de fixation (9).

7. Dispositif d'installation électrique selon l'une quelconque des revendications 1 à 6, **caractérisé en ce que** le support (2) est localisé sur le socle (1) du carter moyennant des entretoises de fixation (10) qui engrènent dans des passages de fixation (16) du socle (1).

8. Dispositif d'installation électrique selon l'une quelconque des revendications 1 à 7, **caractérisé en ce qu'**au moins une entretoise de fixation (10) des deux jambes de fixation (9) venant en une seule pièce avec le support (2) est munie avec une pièce de torsion (15).

9. Dispositif d'installation électrique selon l'une quelconque des revendications 1 à 8, **caractérisé en ce qu'**au moins une jambe de fixation (9) présente sur le support (2) présente un évidement taraudé (13) prévu pour coopérer avec une vis de réglage (4).

10. Dispositif d'installation électrique selon la revendication 9, **caractérisé en ce qu'**au moins un évidement taraudé (13) est intégré dans un pied de fixation (14) saillant de manière angulaire de la jambe de fixation (9).

11. Dispositif d'installation électrique selon l'une quelconque des revendications 1 à 10, **caractérisé en ce que** la branche de base (5) du crampon extensible (3) est munie d'au moins un renforcement.

12. Dispositif d'installation électrique selon l'une quelconque des revendications 1 à 11, **caractérisé en ce que** le panneau fonctionnel (7), avec sa surface principale orientée vers le socle, est prévu en tant que base pour recevoir un dispositif de protection contre les contacts.
